(19) Europäisches Patentamt
European Patent Office
Office européen des brevets

(11) **EP 2 075 460 A2**

(12) **EUROPEAN PATENT APPLICATION**

(43) Date of publication:
**01.07.2009 Bulletin 2009/27**

(51) Int Cl.:
**F03D 1/06** (2006.01)    **F03D 3/00** (2006.01)

(21) Application number: **08172598.8**

(22) Date of filing: **22.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.12.2007 BY 20071606**

(71) Applicants:
• **Klimov, Vyacheslav Stepanovich**
  **220044 Minsk (BY)**

• **Klimov, Oleg Vyacheslavovich**
  **3001 Elgava (BY)**

(72) Inventors:
• **Klimov, Vyacheslav Stepanovich**
  **220044 Minsk (BY)**
• **Klimov, Oleg Vyacheslavovich**
  **3001 Elgava (BY)**

(74) Representative: **KLIMENT & HENHAPEL**
**Patentanwälte OG**
**Singerstrasse 8**
**1010 Wien (AT)**

(54) **Coaxial rotor windmill and method of increasing kinetic eneergy of the flow**

(57)    Coaxial rotor windmill, CRWM, along with its simplicity differs from all other similar devices in that it is capable, without attracting outer energy but only due to the peculiarities of its structure, to increase initial natural wind velocity and consequently, kinetic energy thereof as well as in view of a high conversion efficiency exceeding considerably the analogous rate of all the known devices of this kind to convert this kinetic energy into mechanical rotary energy.

Fig. 1

EP 2 075 460 A2

**Description**

Coaxial rotor windmill and a method of increasing kinetic energy of the flow relate to wind power engineering and are meant for increasing kinetic energy of the flow to be further converted into mechanical rotation energy. The quality of windmills is known to be evaluated as to their ability to derive energy from a wind flow. The standard rate is a wind energy use factor showing the relation of the energy derived from the flow to the whole energy of the flow interacting with the windmill structure. The most widely spread propeller-type windmills are capable of obtaining from the flow less than 0.4 part of its energy at the most favorable optimal proportions of air flow to the device structure. In real conditions however, when the wind flow causes persistent changes of both the velocity of air flow and direction thereof relative to the construction the real wind energy use factor is substantially lower than optimal one /1, p.78-87/.

Also known is a rotor vertical axis windmill /2/, wherein the working medium thereof is formed by logarithmic spiral-shaped load-bearing elements being curved air collectors evenly converging to the rotor centre. When passing through evenly convergent curved air collectors air mass subject to the Bernoulli Law is constrained to increase its motion velocity by obtaining additional kinetic energy that increases the wind energy use factor.

However in spite of the achieved results continually growing need in energy does not resolve the problem of increasing the wind energy use factor as well as efficiency of windmills as a whole.

The proposed invention is aimed at solving these problems.

A windmill is known to obtain wind flow kinetic energy from the force of pressure of air flow that falls down onto the structure profile. In its turn, the force of flow pressure is proportional to its velocity squared and mathematically can be defined by the following equation:

$$X = \frac{C_x}{2} \rho V^2 S \quad ,$$

wherein

ρ - density of air mass;
V - velocity of a wind flow;
S - square area interacting with the flow;
$C_x$ - nondimensional coefficient /1, pages 78-87/, /3, pages 484-485/.

From the equation it follows that alteration of velocity of the wind flow is the most effective way of altering the force of pressure of the wind flow. This dependence underlies the invention as a method and aims at further development of a rotor windmill /2/ taken as a prototype.

The technical decision allowing achievement of the purpose in view and being the essence of the invention consists in the use of an additional autonomous rotor of substantially smaller diameter that is mounted coaxially along the axis in alignment of the rotor windmill /2/.

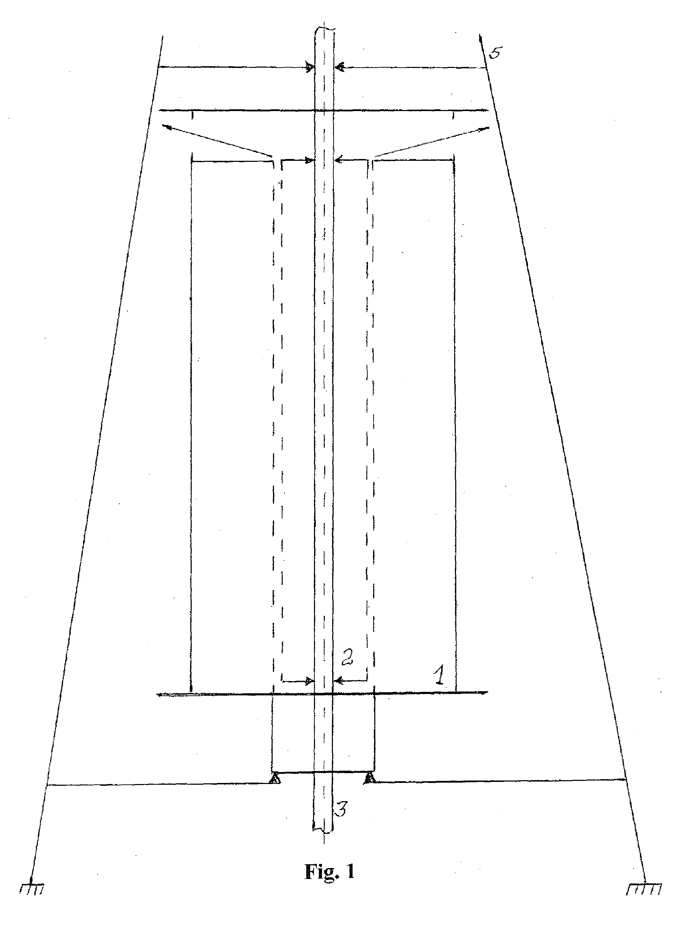

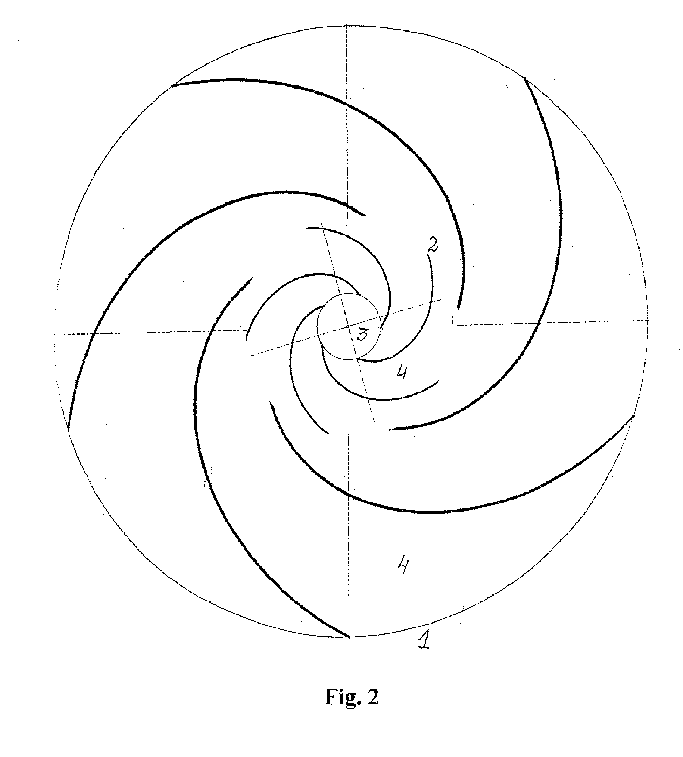

It resulted in a new, then unknown windmill device defined by the authors as COAXIAL ROTOR WINDMILL, the plane view thereof is displayed in Fig. 1 and the section view thereof - in Fig. 2, wherein the following reference numbers are used to refer to:

1- outer rotor;
2- inner rotor;
3- vertical axis;
4- air collectors;
5- support.

Air mass of the wind flow acquiring a considerable gain of kinetic energy due to velocity increase when passing through evenly convergent curved air collectors 4 created by the logarithmic spiral-shaped load-bearing elements of outer rotor 1 falls down onto the load-bearing elements of inner rotor 2 and gear it at an angular velocity which is directly proportional to the velocity of the air flow coming out of the air collectors of the outer rotor.

It is also known that the angular velocity of rotation is inversely proportional to radius/ diameter / rotated construction /4, p. 194-196/, i.e. at the same velocity of the wind flow a rotor of a smaller diameter will always have a large angular velocity.

The combined high-speed flow effect on the inner rotor of a small diameter impart high angular velocity of rotation to the construction that creates in the center of the windmill swirling motion of air mass characterized by low pressure according to the Bernoulli Law. The arising change of pressure results in a strong force making the flow draft into the depression zone meanwhile communicating to the flow a substantial gain of velocity and consequently of kinetic energy, the amount thereof as converted by the windmill into mechanical energy determines its quality.

The proposed method of increasing kinetic energy of a wind flow, the analogue of which in the field of wind power engineering has not been revealed when analyzing patent and technical information, as well as the technical decision for actualization thereof does not go beyond the known technical and technological capabilities, that made it possible for the authors to assemble the acting model of the coaxial rotor windmill in the most simple working conditions using available materials and parts and to test it. The testing results prove unambiguously a high wind energy use factor as well as efficiency of the device as a whole which is many times higher than an analogous rate of all the known wind turbines.

Literature:

1. Peter M. Moretti, Louis V. Divone. Modern Windmills. In the World of Science. 1986/No8.
2. Patent of the Republic of Belarus BY 8019.
3. The Great Soviet Encyclopedia, 3rd edition., V.2, M., 1970.
4. L. Couper. Physics for Everyone. Translated from English, Mir, M.,1973

**Claims**

1. **Rotor coaxial windmills, CRWM,** having a vertical axis on the ground of logarithmic spiral-shaped load-bearing elements, **characterized in that** the windmill working body comprises **two autonomous coaxial** rotors, one of them being of a smaller diameter is positioned inside the outer rotor of a larger diameter and is mounted on the common axis of a windmill through their own bearing assemblies.

2. **The method** of increasing kinetic energy of the air flow interacting with the structure of the coaxial rotor windmill, CRWM, according to claim 1, **characterized in that** the velocity of the flow being a component of kinetic energy thereof when air mass passes through the evenly convergent curved air collectors rises significantly as a result of **flow draft** to the center of the rotor, to the **depression zone** created by the inner rotor rotating at a high velocity.

**Fig. 1**

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER M. MORETTI ; LOUIS V. DIVONE.** *Modern Windmills. In the World of Science*
- The Great Soviet Encyclopedia. 1970, vol. 2, M.
- **L. COUPER.** *Physics for Everyone,* 1973